# EUROPÄISCHE PATENTSCHRIFT

(11) **EP 0 508 501 B1**
(45) Veröffentlichungstag und Bekanntmachung des Hinweises auf die Patenterteilung: **03.07.1996**
(21) Anmeldenummer: 92200318.1
(22) Anmeldetag: 05.02.1992
(51) Int. Cl.: C22B 13/02, C22B 5/12, C22B 15/00, C22B 19/30

(54) **Verfahren zur Reduktion von NE-Metalloxiden in Schlacken**
Method of reducing non-ferrous metal oxides in slags
Procédé pour la réduction des oxydes de métaux non-ferreux dans des laitiers

(30) Priorität: 16.03.1991 DE 4108687
(43) Veröffentlichungstag der Anmeldung: 14.10.1992
(73) Patentinhaber: METALLGESELLSCHAFT Aktiengesellschaft, D-60015 Frankfurt (DE)
(72) Erfinder: Deininger, Lutz, Dr., W-5106 Roetgen (DE)

(56) Entgegenhaltungen:
- AU-B- 503 937
- DE-A- 2 722 915
- GB-A- 1 178 120
- LU-A- 81 040
- US-A- 4 741 770
- US-A- 4 895 595
- JOURNAL OF METALS Bd. 34, Nr. 6, Juni 1982, WARRENDALE, PA, US Seiten 60 - 64; P. FISCHER ET AL.: 'The Present Status of Development of the QSL-Lead Process'
- JOURNAL OF METALS Bd. 41, Nr. 12, Dezember 1989, WARRENDALE, PA, US Seiten 30 - 35; P.E. QUENEAU: 'The QSL Reactor for Lead and Its Prospects for Ni, Cu and Fe'

## Beschreibung

Die vorliegende Erfindung betrifft ein Verfahren zur Reduktion von Bleioxiden enthaltenden flüssigen Schlacken oder Salzschmelzen über einer flüssigen Bleischicht in der Reduktionszone eines QSL-Reaktors wobei kohlenstoffhaltige Reduktionsmittel und sauerstoffhaltiges Gas mittels bodenblasender Düsen in die Bleischicht eingeblasen werden.

In einer Anzahl von pyrometallurgischen Verfahren der NE-Metallurgie fallen Schlacken an, die einen beträchtlichen Anteil eines NE-Metalloxides enthalten. Zur Gewinnung des NE-Metalles muß das NE-Metalloxid in der Schlacke reduziert werden. Diese Reduktion wird durch Einleitung von reduzierenden Stoffen in die Schlackenschicht bewirkt. Das reduzierte NE-Metall fällt entweder flüssig an und setzt sich ab, oder es wird verdampft. Als Reduktionsmittel werden feste, gasförmige oder flüssige kohlenstoffhaltige Stoffe zusammen mit sauerstoffhaltigen Gasen durch Düsen oder Lanzen in die Schlackenschicht geblasen. Feste Reduktionsmittel sind feinkörnige Kohle oder Koks, als gasförmiges Reduktionsmittel wird hauptsächlich Erdgas verwendet und als flüssiges Reduktionsmittel hauptsächlich leichtes Heizöl. Durch Reaktion mit dem Sauerstoff werden die Reduktionsmittel zu CO und H₂ umgesetzt, welche die Reduktion bewirken.

Aus der US-PS 4 266 971 und der US-PS 4 895 595 ist das QSL-Verfahren zur direkten Bleigewinnung aus sulfidischen Erzen in einem länglichen, liegenden Reaktor bekannt, bei dem in der Oxidationszone metallisches Blei und eine PbO-reiche Schlackenphase erzeugt werden. In der Reduktionszone werden durch bodenblasende Düsen ein Reduktionsmittel in fester, flüssiger oder gasförmiger Form und sauerstoffhaltiges Gas in die Schlackenphase eingeblasen. Das dabei erzeugte Sekundärblei fließt sofort in die Reduktionszone und vereinigt sich dort mit dem Primärblei.

Aus US-ZE: Journal of Metals, Bd. 41, Nr. 12 (1989), S. 30 - 35, ist ein OSL-Reaktor bekannt. Dabei befindet sich in der Reduktionszone unterhalb einer breiten Schlackenschicht eine sehr schmale Metallschicht. Durch eine leichte Neigung des Reaktors wird der Metallfluß in Richtung der Oxidationszone bewirkt. Damit verläßt das in der Reduktionszone gebildete Metall diese Zone gleich nach der Bildung.

Aus der US-PS 3 663 207 ist ein Verfahren zur direkten Bleigewinnung in einem länglichen, liegenden Reaktor bekannt, bei dem eine ZnO-reiche Schlacke in die Schlackenzone fließt. Dort werden Erdgas oder feinkörnige Kohle durch seitlich angeordnete Düsen als Reduktionsmittel in die Schlacke geblasen, wodurch ZnO und restliches PbO reduziert und verflüchtigt werden.

Aus der US-PS 4 741 770 ist ein Verfahren zur Verarbeitung von sulfidischen Mischkonzentraten bekannt, die hauptsächlich Zink und daneben Blei und Kupfer enthalten. In der Oxidationszone wird eine Kupfersulfid-reiche Steinphase aufrechterhalten und das aufgegebene Konzentrat durch Einblasen von Sauerstoff in eine ZnO und PbO enthaltende Schlacke umgesetzt. Diese Schlacke wird in der Reduktionszone durch Einblasen von Kohle und Sauerstoff durch seitliche Düsen verblasen, wobei Zink und Blei verflüchtigt werden.

Aus der US-PS 4 362 561 ist es bekannt, das sulfidische Material in einem Schmelzzyklon zu schmelzen und in die Oxidationszone des länglichen Reaktors auf das Bad auszutragen, und in der Reduktionszone reduzierende Gase mittels Lanzen auf die Schlacke zu blasen, wobei z.B. Propan mit Sauerstoff verwendet wird.

Aus der US-PS 3 832 163 ist es bekannt, sulfidische Kupfererze in der Oxidationszone eines länglichen Reaktors auf das Schmelzbad zu chargieren und durch Einblasen von Luft in das Bad einzuschmelzen, und in der Reduktionszone in die Schlacke reduzierende Gase mittels seitlich angeordneter Düsen oder mittels Lanzen einzublasen.

Aus der US-PS 3 892 559 ist es bekannt, in einem länglichen Reaktor kupfer- und zinkhaltige Erze, Kohle und Luft durch seitliche Düsen in ein Schlackenbad zu blasen, den gebildeten flüssigen Kupferstein abzustechen und das Zink zu verflüchtigen.

Aus der US-PS 3 723 096 ist es bekannt, eisenhaltige, oxidische NE-Materialien in einem länglichen Reaktor unter oxidierenden Bedingungen einzuschmelzen und in einer Reduktionszone das NE-Metall durch Aufblasen eines Reduktionsmittels, wie Wasserstoff oder Kohle, auf das Schlackenbad zu reduzieren.

Bei allen diesen Verfahren wird das Reduktionsmittel zusammen mit dem sauerstoffhaltigen Gas entweder direkt in die Schlackenschicht oder durch eine möglichst dünn gehaltene Metallschicht aus dem Boden des Reaktors in die Schlacke geblasen. Die Reduktionswirkung des Reduktionsmittels in der Schlacke ist jedoch in vielen Fällen unbefriedigend, so daß große Überschüsse an Reduktionsmittel erforderlich sind, die wiederum zu betrieblichen Schwierigkeiten führen können.

Der Erfindung liegt die Aufgabe zugrunde, in flüssigen Schlacken oder Salzschmelzen enthaltene Bleioxide weitgehendst in technisch einfacher und wirtschaftlicher Weise zu reduzieren.

Die Lösung dieser Aufgabe erfolgt bei dem eingangs geschilderten Verfahren erfindungsgemäß dadurch, daß am Boden des QSL-Reaktors ein Wehr angeordnet ist, mit dem die Höhe der Bleischicht über den bodenblasenden Düsen auf über 10 cm zurückgestaut wird und die Umsetzung des Reduktionsmittels zu CO und gegebenenfalls H₂ mindestens 50% vor dem Eintritt in die Schlackenschicht beträgt.

Als kohlenstoffhaltiges Reduktionsmittel können feinkörnige Kohlen oder Koks, gasförmige Kohlenwasserstoffe, wie insbesondere Erdgas, und flüssige Kohlenwasserstoffe, wie insbesondere leichtes Heizöl, verwendet werden. Auch Mischungen sind möglich. Als sauerstoffhaltiges Gas können Sauerstoff, mit Sauerstoff angereicherte Luft oder Luft verwendet werden. Die eingeleitete Menge an Sauerstoff in den sauerstoffhaltigen Gasen wird so bemessen, daß das Reduktionsmittel in der Metallschicht zu dem gewünschten Prozentsatz zu CO und ggf. H₂ umgesetzt wird. Die Bildung von H₂ erfolgt beim Einsatz von Kohlenwasserstoffen oder durch die Umsetzung flüchtiger Bestandteile, die in kohle enthalten sind. Das Einblasen in die Metallschicht erfolgt durch bodenblasende Düsen. Die Form des Reaktors, in dem das Verfahren ausgeführt wird, ist weitgehend beliebig. Jedoch sollte der Reaktor so ausgestaltet sein, daß bei einer Unterbrechung des Einblasens die Düsen aus dem Bad herausgedreht werden können, wie z.B. längliche, liegende Reaktoren oder Trommeln, die um ihre Längsachse gedreht werden können, bis die Düsen aus der Schmelze herausgedreht sind. Die zur gewünschten Umsetzung des Reduktionsmittels in der Metallschicht erforderliche Höhe der Metallschicht ist abhängig von der Art des Reduktionsmittels und des sauerstoffhaltigen Gases, dem Metall der Metallschicht, der Temperatur der Metallschicht sowie der Stärke und Geschwindigkeit der Einblasstrahlen. Die erforderliche Höhe kann jedoch empirisch für jeden Betriebsfall relativ einfach ermittelt werden. Zum Schutz der Düsenmundstücke gegen starken Abbrand kann ein Schutzgas als Mantelgas bei Mehrstoffdüsen eingeblasen werden. Das durch die Umsetzung entstandene CO und H₂ enthaltende Reduktionsgas wird gleichzeitig in der Metallschicht stark aufgeheizt und tritt dementsprechend mit hoher Temperatur in die Schlacke ein, wodurch sehr gute Reduktionsbedingungen geschaffen werden.

Außerdem wird im Falle einer unvollständigen Umsetzung dadurch eine weitere Umsetzung zu CO und H₂ in der Schlackenschicht begünstigt. Die Vergasung oder Umsetzung der kohlenstoffhaltigen Reduktionsmittel ist grundsätzlich in allen NE-Metallschmelzen möglich. Damit ist die Verfahrensweise auch bei allen NE-Metallen anwendbar, die karbothermisch erzeugt werden. Die Verfahrensweise ist auch bei Schmelzflußelektrolyseprozessen anwendbar, sofern Sauerstoff elektrochemisch abgeschieden wird. Die flüssige Metallschicht kann neben dem Hauptmetall auch andere NE-Metalle und Verunreinigungen enthalten. Die Temperatur der Metallschicht soll möglichst hoch sein und über etwa 650°C liegen. Da die Temperatur der Metallschicht hauptsächlich durch die Temperatur der darüber befindlichen Schlackenschicht bestimmt wird, liegt sie im allgemeinen dementsprechend höher.

Eine vorzugsweise Ausgestaltung besteht darin, daß die Umsetzung des Reduktionsmittels mindestens 80 % und vorzugsweise über 90 % beträgt. Mit diesem Umsetzungsgrad in der Metallschicht wird eine sehr gute Reduktionswirkung in der Schlacke mit relativ geringem Überschuß an Reduktionsmittel erzielt, und die restlichen brennbaren Bestandteile des aus der Schlacke austretenden Gases können im allgemeinen im freien Reaktorraum verbrannt werden und so zur Beheizung der Schlackenschicht ausgenutzt werden.

Eine vorzugsweise Ausgestaltung besteht darin, daß ein Teil des Reduktionsmittels zu CO₂ und ggf. H₂O in der Metallschicht verbrannt wird und durch die dabei erzeugte Wärmemenge die durch das eingeblasene Reduktionsmittel in der Metallschicht verbrauchte Wärmemenge in etwa kompensiert wird. Dadurch wird eine Abkühlung der Metallschicht an den Einblasstellen in einfacher Weise vermieden.

Eine vorzugsweise Ausgestaltung besteht darin, daß beim Einblasen von Methan als Reduktionsmittel zur Förderung der Methanspaltung Sauerstoff und/oder Wasserdampf zugesetzt wird. Dadurch wird eine schnelle und gute Umsetzung erzielt.

Beim QSL-Verfahren fließt das in der Reduktionszone anfallende Sekundärblei sofort in die Oxidationszone. Zur Aufrechterhaltung der gewünschten Schichthöhe in der Reduktionszone kann der Reaktor waagerecht angeordnet werden, und die Höhe des Bleibades in der Oxidationszone entsprechend so geregelt werden, daß ständig die gewünschte Höhe der Bleischicht in der Reduktionszone vorliegt.

Die Vorteile der Erfindung bestehen hauptsächlich darin, daß aufgrund der relativ hohen Wärmeleitfähigkeit und des hohen Wärmeeindringvermögens der Matallschmelzen die Bildung des Reduktionsgases spontan abläuft, wenn feste, flüssige und gasförmige Kohlenstoffträger in die Metallschmelze geblasen werden. Weiterhin tritt das Reduktionsgas bereits auf Schmelzbadtemperatur erwärmt in die Schlacke, wodurch sehr gute Reduktionsbedingungen geschaffen werden. Dieses führt auch zu einer guten Ausnutzung des Reduktionsgases.

## Patentansprüche

1. Verfahren zur Reduktion von Bleioxiden enthaltenden flüssigen Schlacken oder Salzschmelzen über einer flüssigen Bleischicht in der Reduktionszone eines QSL-Reaktors, wobei kohlenstoffhaltige Reduktionsmittel und sauerstoffhaltiges Gas mittels bodenblasender Düsen in die Bleischicht eingeblasen werden und am Boden des QSL-Reaktors ein Wehr angeordnet ist, mit dem die Höhe der Bleischicht über den bodenblasenden Düsen auf über 10 cm zurückgestaut wird und die Umsetzung des Reduktionsmittels zu CO und gegebenenfalls H₂ mindestens 50% vor dem Eintritt in die Schlackenschicht beträgt.

2. Verfahren nach Anspruch 1, wobei die Umsetzung des Reduktionsmittels mindestens 80% und vorzugsweise über 90% beträgt.

3. Verfahren nach Anspruch 1 oder 2, wobei ein Teil des Reduktionsmittels zu CO₂ und ggf. H₂O in der Metallschicht verbrannt wird und durch die dabei erzeugte Wärmemenge die durch das eingeblasene Reduktionsmittel in der Metallschicht verbrauchte Wärmemenge in etwa kompensiert wird.

4. Verfahren nach einem der Ansprüche 1 bis 3, wobei beim Einblasen von Methan als Reduktionsmittel zur Förderung der Methanspaltung Sauerstoff und/oder Wasserdampf zugesetzt wird.

## Claims

1. A method for the reduction of liquid slags or molten salts containing lead oxides over a liquid lead layer in the reduction zone of a QSL reactor, wherein carbon-containing reducing agents and oxygen-containing gas are injected into the lead layer by means of bottom-blowing nozzles and a weir is arranged on the bottom of the QSL reactor, by means of which the lead layer above the bottom-blowing nozzles is retained to a height of above 10 cm and the reaction of the reducing agent to CO and optionally H₂ is at least 50% before entry into the slag layer.

2. A method according to Claim 1, wherein the reaction of the reducing agent is at least 80% and preferably over 90%.

3. A method according to Claim 1 or 2, wherein a portion of the reducing agent is burned in the metal layer to form CO₂ and optionally H₂O and the quantity of heat consumed in the metal layer by the injected reducing agent is approximately compensated by the quantity of heat produced thereby.

4. A method according to one of Claims 1 to 3, wherein when injecting methane as reducing agent oxygen and/or water vapour is added to promote the cleavage of methane.

## Revendications

1. Production de réduction de scories liquides ou de sels fondus contenant des oxydes de plomb sur une couche de plomb liquide dans la zone de réduction d'un réacteur QSL, un agent réducteur carbonacé et du gaz contenant de l'oxygène étant insufflé dans la couche de plomb au moyen de buses de fond et il est prévu au fond du réacteur QSL un déversoir par lequel la hauteur de la couche de plomb au-dessus des buses de fond est ramenée à plus de 10 cm et la conversion de l'agent réducteur en CO et le cas échéant en H₂ s'élève au moins à 50 % avant l'entrée dans la couche de scories.

2. Procédé suivant la revendication 1, dans laquelle la conversion de l'agent réducteur s'élève au moins à 80 % et de préférence à plus de 90 %.

3. Procédé suivant la revendication 1 ou 2, dans lequel une partie de l'agent réducteur est brûlé en CO₂ et éventuellement en H₂O dans la couche métallique et par la quantité de chaleur ainsi produite la quantité de chaleur consommée dans la couche métallique par l'agent réducteur insufflé est sensiblement compensée.

4. Procédé suivant l'une des revendications 1 à 3, dans lequel lors de l'insufflation de méthane comme agent réducteur on ajoute pour favoriser la décomposition du méthane de l'oxygène et/ou de la vapeur d'eau.
